# EUROPÄISCHE PATENTSCHRIFT

(11) **EP 1 945 360 B1**
(45) Veröffentlichungstag und Bekanntmachung des Hinweises auf die Patenterteilung: **18.07.2012**
(21) Anmeldenummer: 06817452.3
(22) Anmeldetag: 08.11.2006
(51) Int. Cl.: B01L 3/00, G01N 21/03

(54) **PHOTOMETRISCHES MESSVERFAHREN FÜR EINE PROBENFLÜSSIGKEIT UND MISCHBEHÄLTER FÜR EINE PHOTOMETRISCHE MESSEINRICHTUNG**
PHOTOMETRIC MEASURING METHOD FOR A SAMPLE LIQUID AND MIXING CONTAINER FOR A PHOTOMETRIC MEASURING APPARATUS
PROCEDE DE MESURE PHOTOMETRIQUE POUR UN ECHANTILLON LIQUIDE ET RESERVOIR DE MELANGE POUR UN SYSTEME DE MESURE PHOTOMETRIQUE

(30) Priorität: 08.11.2005 AT 18222005
(43) Veröffentlichungstag der Anmeldung: 23.07.2008
(73) Patentinhaber: Bonecker, Gerhard, 5020 Salzburg (AT)
(72) Erfinder: Bonecker, Gerhard, 5020 Salzburg (AT)
(74) Vertreter: Babeluk, Michael
(86) Internationale Anmeldenummer: PCT/AT2006/000459
(87) Internationale Veröffentlichungsnummer: WO 2007/053870

(56) Entgegenhaltungen:
- EP-A2- 0 353 590
- DE-A1- 1 623 082
- DE-A1- 2 441 724
- DE-B- 1 291 543
- DE-U1- 7 629 728
- FR-A1- 2 861 702
- GB-A- 1 234 998
- US-A- 4 227 815
- US-A- 4 580 901
- US-A- 5 257 650
- US-A- 5 358 691
- US-A- 5 658 531
- US-B1- 6 495 373

## Beschreibung

Die Erfindung betrifft ein Testset für eine photometrische Messeinrichtung, mit einem Mischbehälter, der ein von seiner Füllöffnungen abnehmbares Verschlusselement und eine in seinem Inneren vorliegende, erste Flüssigkeit aufweist, sowie mit einem Dosierelement, welches in einem beidseitig verschlossenen Hohlraum eine zweite Flüssigkeit enthält, wobei das Dosierelement nach der Abnahme des Verschlusselementes vom Mischbehälter und der Zugabe einer Probenflüssigkeit in die erste Flüssigkeit in die Füllöffnung des Mischbehälters einsetzbar ist. Die Erfindung betrifft weiters ein photometrisches Messverfahren für eine Probenflüssigkeit, welche mit einer ersten und einer zweiten Flüssigkeit vermischt wird, wobei die erste Flüssigkeit in einem verschlossenen Mischbehälter und die zweite Flüssigkeit in einem Dosierelement vorliegt.

Bei vielen medizinischen Tests muss die zu vermessende Probe zunächst mit einer ersten Flüssigkeit in Kontakt gebracht werden, um die Probe zu konditionieren, für die Messung vorzubereiten oder um eine erste chemische oder biologische Reaktion auszulösen. In einem zweiten Schritt wird dann eine zweite Flüssigkeit zugesetzt, um den zu bestimmenden Analyten der Probe in einen für die photometrische Messung geeigneten Zustand zu überführen oder eine zweite chemische oder biologische Reaktion auszulösen. Beispielsweise wird bei einer sogenannten CRP-Messung (C-Reaktives Protein), welche zur Unterscheidung viraler oder bakterieller Entzündungen dient, eine Blutprobe mit einer Lysereagenz vermischt und danach eine Latexreagenz zugesetzt und vermischt, wobei die chemische Reaktion mit Hilfe eines Photometers gemessen wird.

Im Zusammenhang mit weitgehend automatisierten, photometrischen Messungen sind aufwändige Analyseautomaten bekannt geworden, welche in einem Probenkarussell eine Vielzahl von Probenküvetten aufnehmen, wobei weiters ein Reagenzienkarussell mit den entsprechenden Reagenzmitteln vorgesehen ist. Mit Hilfe einer Pipetiereinrichtung, welche mit einem Schwenkarm ausgestattet ist, können vorgegebene Reagenzien in die Probe dosiert werden, wobei aufwändige Bewegungsabläufe der einzelnen Bauteile, wie Probenkarussell, Reagenzienkarussell und Pipetiereinrichtung mit Hilfe von Schrittmotoren gesteuert werden müssen. Das Reaktionsergebnis nach der Vermischung der Probe mit den Reagenzmitteln wird meist in einer eigenen Messstation photometrisch vermessen.

Derartige Systeme sind beispielsweise aus der US 4,965,049 A sowie aus der WO 93/20450 A1 bekannt. Ein Nachteil bei diesen Vorrichtungen besteht im komplexen Liquidhandling, da unterschiedliche Proben- und Reagenzflüssigkeiten aus deren Vorrats- bzw. Aufnahmebehältern mittels Schlauchleitungen und Pipetiereinrichtungen im Messgerät transportiert werden müssen, wobei es auch notwendig ist, automatische Wasch- und Reinigungssysteme einzusetzen, um ein Verschleppen der Proben- bzw. Reagenzflüssigkeiten im Gerät zu vermeiden.

Aus der WO 2005/071388 A1 ist ein Probennahme- und Messelement bekannt geworden, welches aus mehreren zylindrischen Kompartments besteht, die axial verschiebbar ineinander gesteckt sind, wobei deren Innenräume in der Ausgangsstellung durch eine durchstoßbare Membran verschlossen sind. Zwei der Elemente enthalten Reaktionsmittel, in das dritte Element kann eine Probe eingebracht werden. Die Kompartments werden dann durch Druckausübung auf die beiden äußeren Elemente ineinander geschoben, wodurch die Membranen an den Verbindungsstellen aufreißen und gleichzeitig die beiden Reagenzflüssigkeiten mit der Probe vermischt werden. Eine Analyse erfolgt entweder durch optische Inspektion oder durch Einsatz in ein Messgerät.

Ein ähnlicher Sammel- und Mischbehälter, in welchem die Probe auch vermessen werden kann, ist aus der WO 95/25948 bekannt, wobei die Probe mit einem Stieltupfer gewonnen und in einen zylindrischen Behälter mit mehreren Kompartments eingeführt wird. Die einzelnen Kompartments sind durch Membranen verschlossen, welche mit Hilfe eines Einführelementes für den Stieltupfer durchstoßen werden, so dass die Reagenzien mit der Probe im Tupfer in Kontakt kommen können.

Die DE 24 41 724 A1 beschreibt eine Analysenpatrone für photospektrometrische Messungen, welche einen ersten Behälter zur Aufnahme einer ersten Flüssigkeit aufweist, wobei der Behälter zunächst durch ein Verschlusselement verschlossen ist. Nach der Abnahme des Verschlusselementes wird in den Behälter die zu analysierende Probe eingegeben und danach ein Behältereinsatz aufgesetzt, welcher in einer Hilfskammer eine Reagenzflüssigkeit aufweist. Die Hilfskammer ist mit einem in der Ausgangsstellung über den Behältereinsatz hinausragenden zylindrischen Stößel versehen, welcher beim Niederdrücken mit Hilfe einer frontseitigen Schneidkante eine Membran der Hilfskammer aufreißt und damit die zweite Flüssigkeit aus der Hilfskammer in den Behälter mit der ersten Flüssigkeit entlässt. Nachdem sich die Flüssigkeiten vollständig gelöst und vermischt haben, wird der Behälter in der für das Analyseverfahren erforderlichen Weise erwärmt und die Probe fotometrisch vermessen.

Aus der DE 16 23 082 A1 ist ein zweiteiliges Testset für photometrische Messungen bekannt das eine optisch transparente Messküvette mit einem ersten Reagenz aufweist, auf die ein Aufnahmebehälter mit einem Lösungsmittel aufgesetzt werden kann, wobei der Aufnahmebehälter vorerst durch einen beweglichen Stopfen verschlossen ist. Beim Aufsetzen des Aufnahmebehälters auf die Messküvette verdrängt ein nach oben offener Nippel des Aufnahmebehälters den beweglichen Stopfen ins Innere des Aufnahmebehälters, wodurch die beiden Reagenzien vermischt werden können. Erst danach wird die zu vermessende Probe zugesetzt.

Aus der US 6,495,373 B1 ist ein Probengefäß für die Photometrie bekannt, welches aus einem Behälter zur Aufnahme einer ersten Flüssigkeit und einem Verschlussaufsatz, zur Aufnahme einer zweiten Flüssigkeit besteht. Die zweite Flüssigkeit im Verschlussaufsatz ist durch eine Membran von der ersten Flüssigkeit getrennt, wobei ein stabförmiges Betätigungselement zum Durchstechen der Membran vorgesehen ist. Das Betätigungselement wirkt mit seiner Spitze direkt auf die Membran, bei deren Durchbrechen Teilstücke am Verschlussaufsatz verbleiben, welche als Tropfenfänger wirken. Das Betätigungselement ragt vor dessen Betätigung aus dem Verschlussaufsatz heraus, so dass in nachteiliger Weise eine Fehlbetätigung außerhalb des Analysengerätes möglich ist. Die Probengefäße werden in eine Analysenvorrichtung eingesetzt, wobei ein um eine vertikale Achse drehbarer Zylinder mit Aufnahmeöffnungen für die Probengefäße vorgesehen ist. Beim Schließen eines Deckels der Analysenvorrichtung wirkt dieser auf das Betätigungselement, sodass sie Membran durchbrochen wird.

Aus der DE 12 91 543 A1 ist ein einteiliger Behälter bekannt, der in zwei durch einen Sperrstopfen getrennten Kompartments unterschiedliche flüssige Reagenzien aufweist. Mit Hilfe eines Kolbenstopfens, der mittels einer händisch betätigbaren Gewindekappe in den Behälter gedrückt werden kann, wird ein hydraulischer Druck in der ersten Flüssigkeit erzeugt, der den Sperrstopfen nach unten bewegt, wodurch die beiden Reagenzien vermischt werden können.

Aufgabe der Erfindung ist es ein in der Handhabung vereinfachtes photometrisches Messverfahren für eine Probenflüssigkeit vorzuschlagen, welche vor der eigentlichen Messung mit einer ersten und einer zweiten Flüssigkeit vermischt wird, bzw. ein dafür geeignetes Testset, wobei jedes Liquidhandling außerhalb des Testsets entfallen soll. Weiters soll auf einfache Weise eine genaue Dosierung der ersten und der zweiten Flüssigkeiten möglich sein, wobei die einzelnen Analyseschritte in einer Analysenvorrichtung weitgehend automatisiert durchführbar sein sollen.

Diese Aufgabe wird erfindungsgemäß dadurch gelöst, dass das Dosierelement einen zur Gänze im Hohlraum angeordneten, in den Hohlraum verschiebbaren Verschlusskolben aufweist und an der gegenüberliegenden Seite durch einen beweglichen Stopfen verschlossen ist, welcher durch eine vom Verschlusskolben ausgelöste Druckbeaufschlagung auf die zweite Flüssigkeit mit dieser in das Innere des Mischbehälters austritt. Im Gegensatz zur Ausführung gemäß DE 24 41 724 A ist somit bei der Erfindung ein beweglicher Stopfen als Verschlusselement für den Hohlraum im Dosierelement vorgesehen, welcher nach einer Druckbeaufschlagung auf die zweite Flüssigkeit mit dieser in das Innere des Mischbehälters austritt. Das hat zur Folge, dass am austrittsseitigen Ende des Dosierelementes keine Membranteile anhaften, in welchen sich Reste der zweiten Flüssigkeit anlagern und so zu Ungenauigkeiten im Mischverhältnis und der nachfolgenden Messung sorgen.

Der Hohlraum weist auf der dem Stopfen gegenüberliegenden Seite einen zur Gänze im Hohlraum angeordneten, verschiebbaren Verschlusskolben auf. Bei der Erfindung befindet sich der von einem Stempel des Analysators betätigbare, axial verschiebbare Verschlusskolben zur Gänze im Hohlraum des Dosierelementes. Im Unterschied zur DE 24 41 724 A wirkt der Kolben im Dosierelement nicht direkt auf das Verschlusselement sondern über den Druck in der Flüssigkeit, bzw. den darüber angeordneten Luftpolster und ragt auch nicht über das Dosierelement heraus, so dass eine Fehlbetätigung der Vorrichtung vor dem Einsatz in einen Analysator ausgeschlossen ist.

Gemäß einer besonders vorteilhaften Weiterbildung der Erfindung ist der Flüssigkeitsspiegel im Mischbehälter derart bemessen ist, dass - zumindest nach der Vermischung mit der zweiten Flüssigkeit - das Dosierelement mit dessen Austrittsöffnung in die erste Flüssigkeit im Mischbehälter eintaucht. Das führt zu einer vollständigen Entleerung (ohne anhaftende Tropfen) des Dosierelementes, wodurch ein exaktes Mischverhältnis und auch ein exaktes Messergebnis möglich ist.

Das erfindungsgemäße photometrische Messverfahren ist durch folgende Schritte gekennzeichnet:
- Öffnen des Mischbehälters, der die erste Flüssigkeit enthält;
- Hinzufügen der Probenflüssigkeit;
- Verschließen des Mischbehälters mit einem Dosierelement, welches in einem mit einem beweglichen Stopfen verschlossnen Hohlraum die zweite Flüssigkeit enthält;
- Vermischen der ersten Flüssigkeit mit der Probenflüssigkeit;
- Einbringen der zweiten Flüssigkeit aus dem Dosierelement in den Mischbehälter, wobei durch einen zur Gänze im Hohlraum angeordneten, in den Hohlraum verschiebbaren Verschlusskolben, der an der gegenüberliegenden Seite des beweglichen Stopfen angeordnet ist, Druck auf die zweite Flüssigkeit ausgeübt und diese mit dem beweglichen Stopfen in die erste Flüssigkeit entlassen wird;
- Vermischen der ersten Flüssigkeit, der Probenflüssigkeit und der zweiten Flüssigkeit;
- Photometrische Messung der chemischen Reaktion in einem Analysator; und
- Berechnen der Konzentration zumindest eines Probeninhaltsstoffes.

Zur Gewinnung eines Ausgangswertes für die Konzentrationsbestimmung kann erfindungsgemäß nach dem Vermischen der ersten Flüssigkeit mit der Probenflüssigkeit eine photometrische Kalibriermessung durchgeführt werden.

Die zweite Flüssigkeit wird bevorzugt mit Hilfe eines Kolbens aus dem Dosierelement in das Innere des Mischbehälters transferiert und dort mittels eines im Mischbehälter vorliegenden Magnetrührstabes oder ferromagnetischen Elementes (z.B. eine Stahlkugel) vermischt.

Die beiden Elemente des Testsets, der Mischbehälter mit der ersten Flüssigkeit und das Dosierelement mit der zweiten Flüssigkeit, können in einer sterilen Verpackung als Einmalelemente angeboten und nach Gebrauch samt der Probe entsorgt werden, wodurch direkt im Analysator bzw. außerhalb des Mischbehälters jedes Liquidmanagement entfällt.

Erfindungsgemäß ist am Mischbehälter ein berührungslos auslesbarer Informationsträger beispielsweise ein RFID-Chip oder ein Barcode, angeordnet. Der Informationsträger kann auch auf einer Verpackung des Testsets oder einer Verpackungseinheit für mehrere Testsets angeordnet oder der Verpackung beigelegt sein.

Erfindungsgemäß kann der Stopfen aus einem Material bestehen, welches in der ersten Flüssigkeit im Mischbehälter aufschwimmt, so dass die photometrische Messung in der Flüssigkeit nicht behindert wird.

Die Erfindung wird im Folgenden anhand von zum Teil schematischen Zeichnungen näher erläutert. Es zeigen jeweils in einer Schnittdarstellung:
- Fig. 1: den Mischbehälter eines erfindungsgemäßen Testsets im Ausgangszustand;
- Fig. 2: den Mischbehälter gemäß Fig. 1 mit aufgesetztem Dosierelement;
- Fig. 3: den Mischbehälter gemäß Fig. 2 eingesetzt in eine photometrische Messeinrichtung;
- Fig. 4: eine Draufsicht auf den Mischbehälter mit einer Spulenanordnung für die Mischeinheit;
- Fig. 5: ein erfindungsgemäßes Testset bestehend aus einem Mischbehälter und einem Dosierelement;
- Fig. 6: das Dosierelement gemäß Fig. 5 in einer Schnittdarstellung;
- Fig. 7: einen Stopfen des Dosierelementes gemäß Fig. 6 in einer vergrößerten Schnittdarstellung;
- Fig. 8: den Stopfen gemäß Fig. 7 in einer dreidimensionalen Ansicht;
- Fig. 9: eine photometrische Messeinrichtung zur Durchführung des photometrischen Messverfahrens in einer dreidimensionalen Ansicht;
- Fig. 10: die ausschwenkbare Klappe der Messeinrichtung nach Fig. 9 samt Trägereinheit für den Mischbehälter und Betätigungseinrichtung für den Verschlusskolben in einer Seitenansicht;
- Fig. 11: die Trägereinheit gemäß Fig. 10 ohne Klappe in einer Vorderansicht;
- Fig. 12: einen Längsschnitt durch die Trägereinheit gemäß Linie XII-XII in Fig. 13;
- Fig. 13: einen Schnitt durch die Trägereinheit gemäß Linie XIII- XIII in Fig. 11; sowie
- Fig. 14: und Fig. 15 eine Ausführungsvariante des erfindungsgemäßen Testsets in zwei Betriebszuständen.

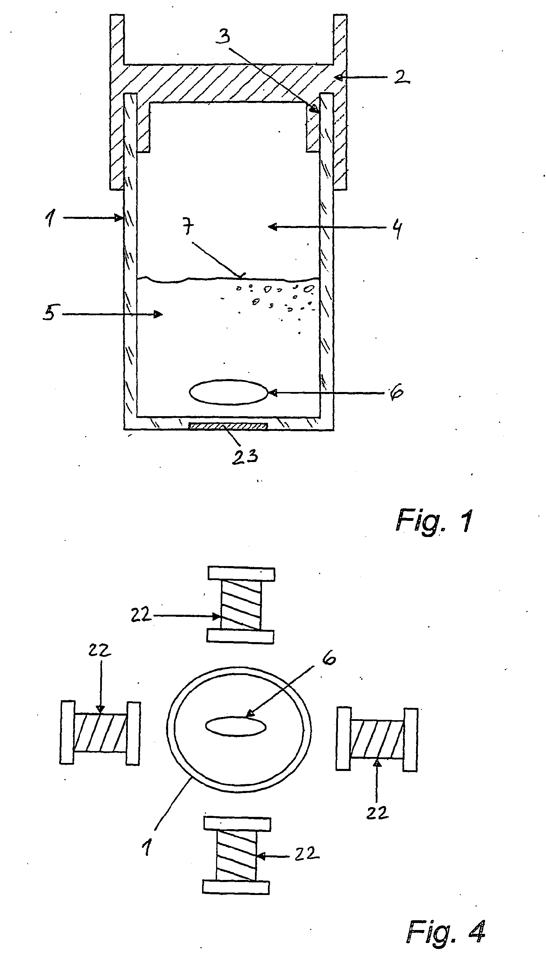

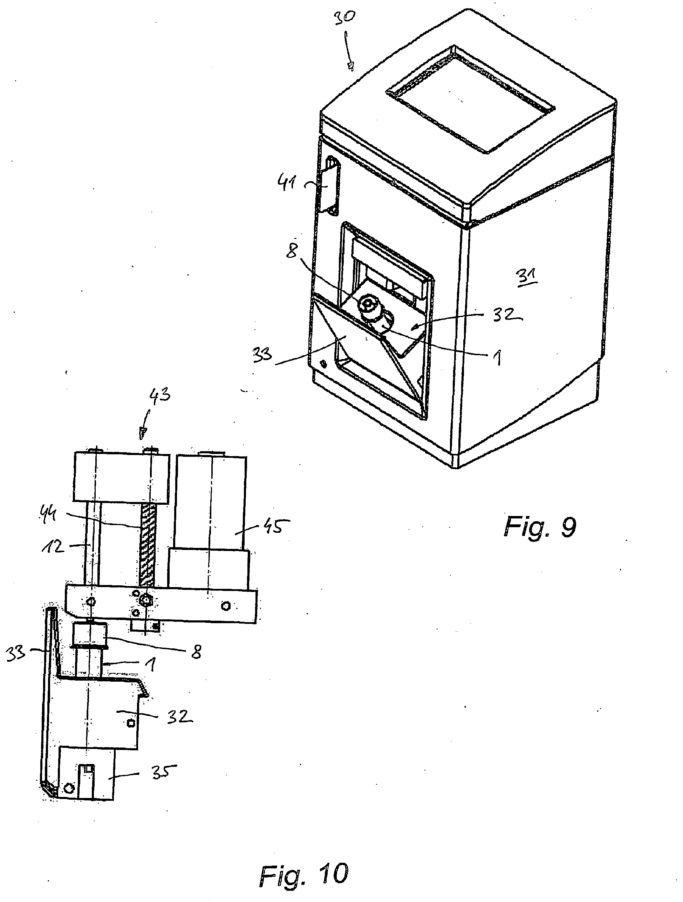

Der in den Fig. 1 bis Fig. 4 dargestellte Mischbehälter 1 des Testsets dient zum Einsatz in einen photometrischen Analysator (siehe Fig. 9) und weist ein Verschlusselement 2 auf, beispielsweise einen abnehmbaren Kunststoffstoppel, welcher die Füllöffnung 3 verschließt. Im Inneren 4 des Mischbehälters 1 befindet sich eine erste Flüssigkeit 5, sowie eine Stahlkugel oder ein Magnetrührstab 6. Über der ersten Flüssigkeit 5 befindet sich ein Luftraum, wobei die Flüssigkeitsoberfläche mit 7 angedeutet ist.

Zur Durchführung einer photometrischen Messung wird nun das Verschlusselement 2 vom Mischbehälter 1, beispielsweise einer für die Messstrahlung transparenten Messküvette, abgenommen und eine Probenflüssigkeit, beispielsweise mit einer Pipette, hinzugefügt, sodass sich nun im Mischbehälter 1 ein Gemisch 5' aus erster Flüssigkeit und Probenflüssigkeit befindet. Danach wird der Mischbehälter 1 mit einem Dosierelement 8 des Testsets verschlossen, welches die Füllöffnung 3 in gleicher Weise verschließt wie das ursprüngliche Verschlusselement 2.

Im Dosierelement 8 befindet sich ein Hohlraum 9, welcher bevorzugt zylindrisch ausgeführt ist und in Richtung zum Gemisch 5' mit einem beweglichen Stopfen 10 (z.B. Silikonstopfen) verschlossen ist. Auf der anderen Seite befindet sich im Hohlraum 9 ein axial verschiebbarer Verschlusskolben 11, auf welchen mit einem Stempel 12 des Analysators Druck ausgeübt werden kann. Nun wird der Mischbehälter 1 in den Analysator (siehe Fig. 9) eingesetzt und der Magnetrührstab 6 in Bewegung versetzt, um die erste Flüssigkeit mit der Probenflüssigkeit zu vermischen. Gegebenenfalls wird nun eine erste Messung durchgeführt, um einen Ausgangswert für die nachfolgende Konzentrationsmessung zu erhalten.

Danach wird der Verschlusskolben 11 mit Hilfe des Stempels 12 nach unten bewegt, wobei der entstehende Druck über einen Luftpolster auf die zweite Flüssigkeit 13 im Dosierelement 8 übertragen wird. Durch den sich erhöhenden Druck tritt der Stopfen 10 aus dem Hohlraum 9 aus, so dass die zweite Flüssigkeit 13 in den Mischbehälter 1 entlassen wird und ein Gemisch 5" entsteht.

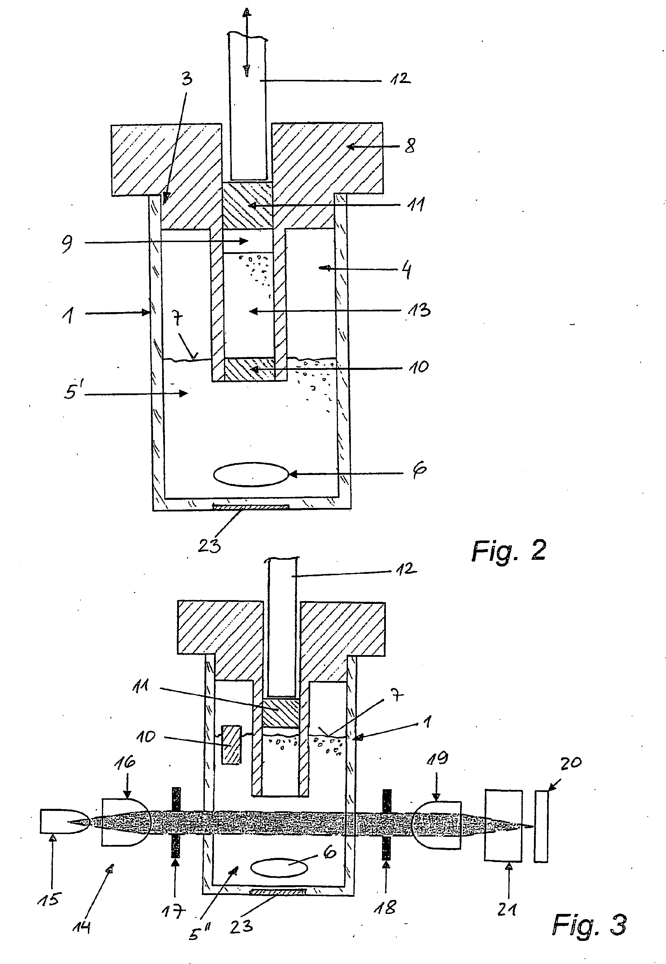

Der Stopfen 10 besteht aus einem Material, welches in der Flüssigkeit im Mischbehälter 1 aufschwimmt (siehe Fig. 3), sodass die photometrische Messung nicht behindert wird. Der Flüssigkeitsspiegel 7 im Mischbehälter 1 ist derart bemessen, dass - zumindest nach der Vermischung mit der zweiten Flüssigkeit 13 - das Dosierelement 8 mit dessen Austrittsöffnung in die Flüssigkeit im Mischbehälter 1 eintaucht. Die vollständige Entleerung (ohne anhaftende Tropfen) des Dosierelementes 8 wird dadurch ermöglicht.

Es folgt nun ein weiterer Mischvorgang mit dem Magnetrührstab 6, wonach die Probe - wie in Fig. 3 dargestellt - mit Hilfe einer photometrischen Einrichtung 14 vermessen wird. Diese weist beispielsweise eine Lichtquelle 15, beispielsweise eine LED, eine Eintrittslinse 16, sowie eine Eintrittsblende 17 eingangsseitig und eine Austrittsblende 18, eine Austrittslinse 19 und eine Photodiode 20 austrittsseitig auf. Zwischen der Austrittslinse 19 und der Photodiode 20 kann ein Filter 21 angeordnet sein.

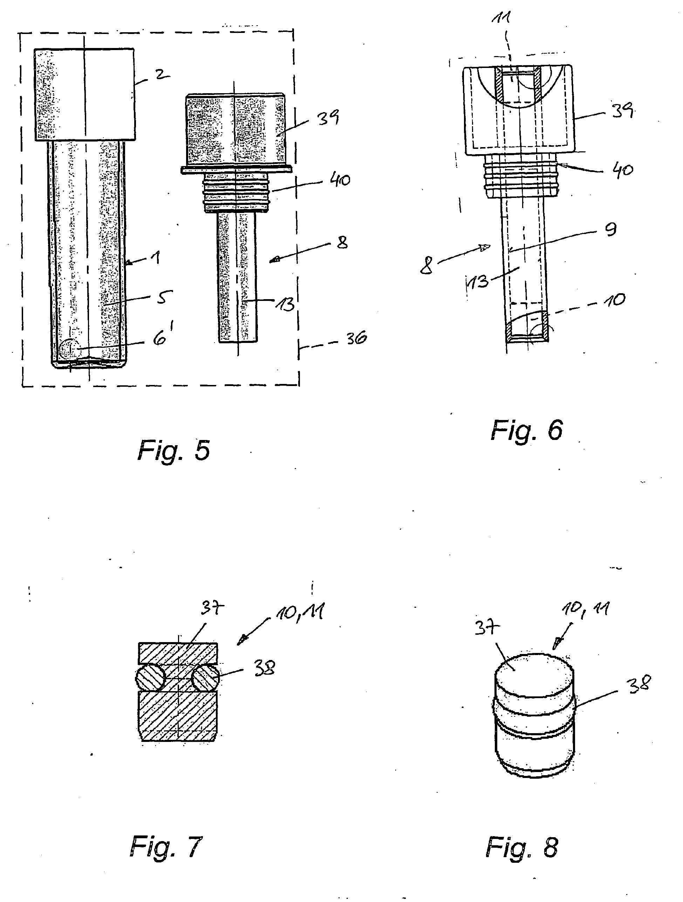

Fig. 4 zeigt eine Anordnung von Magnetspulen 22, welche den im Mischbehälter 1 angeordneten Magnetrührstab 6 in bekannter Weise in Bewegung versetzen. Alternativ kann auch ein Motor verwendet werden, der eine unterhalb des Mischbehälters angeordnete Scheibe (siehe Magnetrührscheibe 24 in Fig. 5 und Fig. 6, sowie Fig. 11 und Fig. 12) in Rotation versetzt, auf der bzw. in der sich zumindest ein Permanentmagnet 25 befindet.

Zur Probenidentifikation kann am Mischbehälter 1 ein berührungslos auslesbarer Informationsträger 23, beispielsweise ein RFID-Chip oder ein Barcode, angeordnet sein. Es ist auch möglich, einen RFID-Chip pro Verpackungseinheit mit beispielsweise 25 oder 50 Testsets zu verwenden. Auf dem RFID-Chip können Art, Anzahl und Kalibrationsdaten sowie ein Ablaufdatum des Testsets angebracht werden, womit sich eine Automatisierung der Testerkennung ergibt und eine erhöhte Befundsicherheit gewährleistet ist.

Fig. 5 zeigt ein Testset mit einem Mischbehälter 1 samt Verschlusselement 2 gefüllt mit der ersten Flüssigkeit 5 und ein Dosierelement 8 gefüllt mit der zweiten Flüssigkeit 13 in einer Verpackung 36. Das Dosierelement 8 weist ein Griffelement 39 zur besseren Handhabung sowie angeformte Dichtringe 40 zur Abdichtung nach dem Einsetzen in den Mischbehälter 1.

Wie in der Schnittdarstellung gemäß Fig. 6 strichliert angedeutet, ist der durchgehende, zylindrische Hohlraum 9 des Dosierelementes 8 am unteren Ende mit einem beweglichen Stopfen 10 und am gegenüberliegenden Ende mit einem beweglichen Verschlusskolben 11 verschlossen. Der Stopfen 10 und der Verschlusskolben 11 können gleichartig ausgebildet sein und wie in Fig. 7 und Fig. 8 dargestellt einen zylindrischen Körper 37 aus einem Spritzgussteil aufweisen, der in einer umlaufenden Nut einen O-Ring 38 aufnimmt, der sich dichtend an den zylindrischen Hohlraum 9 des Dosierelementes 8 anlegen.

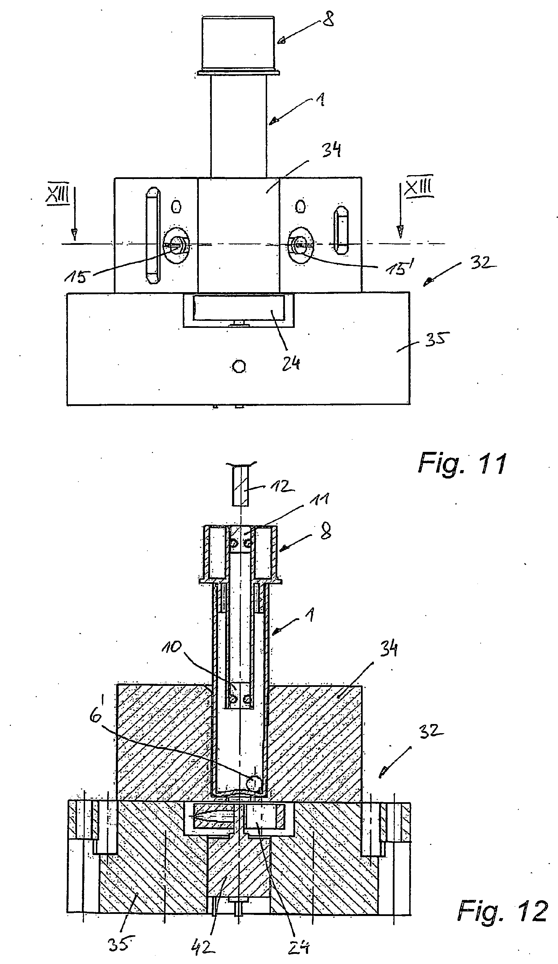

Fig. 9 zeigt eine photometrische Messeinrichtung 30 zur Vermessung einer Probenflüssigkeit, welche in einem Gehäuse 31 eine Trägereinheit 32 für zumindest einen Mischbehälter 1 samt aufgesetztem Dosierelement 8 aufnimmt, wobei der Mischbehälter 1 - wie weiter vorne ausgeführt - eine erste Flüssigkeit und die Probenflüssigkeit beinhaltet und des Dosierelement 8 eine zweite Flüssigkeit enthält. Die Trägereinheit 32 ist in einer aus dem Gehäuse 31 ausschwenkbaren Klappe 33 integriert und mit dieser von einer Messposition im Analysator in eine Ladeposition (siehe dargestellte Position) zur Eingabe des Mischbehälters 1 verschwenkbar. Es wäre auch möglich die Trägereinheit 32 in eine aus dem Analysator ausziehbare Lade zu integrieren, welche von einer Messposition im Analysator in eine Ladeposition für den Mischbehälter 1 verschiebbar ist. In der Messposition wirkt ein Betätigungselement, beispielsweise ein Stempel 12, der Messeinrichtung 30 auf den Verschlusskolben 11 ein (siehe z.B. Fig. 10 oder Fig. 12), bis der Stopfen 10 und die zweite Flüssigkeit aus dem Dosierelement 8 in den Mischbehälter 1 austritt.

Fig. 10 zeigt die ausschwenkbare Klappe 33 der Messeinrichtung samt Trägereinheit 32 für den Mischbehälter 1 sowie eine Betätigungseinrichtung 43 für den Stempel 12 in einer Seitenansicht. Der Stempel 12 wird mit Hilfe einer Spindel 44, welche von einem Motor 45 angetrieben wird, auf und ab bewegt.

Wie in den folgenden Fig. 11 bis Fig. 13 dargestellt, weist die Trägereinheit 32 einen vorzugsweise thermostatisierbaren Aufnahmeblock 34 für den Mischbehälter 1 auf, in welchem zwei photometrische Einrichtungen 14, 14' mit jeweils einer Lichtquelle 15, 15' und einer Photodiode 20, 20' angeordnet sind, wobei die optischen Achsen der photometrischen Einrichtungen 14, 14' im Wesentlichen senkrecht auf die Längsachse des Mischbehälters 1 stehen. Weiters weist die Trägereinheit 32 einen Mischeinheit 35 mit einer von einem Motor 42 betriebenen Magnetrührscheibe 24 auf, welche auf einen Magnetrührstab oder ein ferromagnetisches Element, beispielsweise eine Stahlkugel 6', im Inneren des Mischbehälters 1 einwirkt.

Die beiden photometrischen Einrichtungen 14, 14' sind z.B. mit zwei LED's unterschiedlicher Wellenlänge bestückt, wobei das Gerät aufgrund der am RFID-Chip gespeicherten Daten oder einer in das Gerät einsteckbaren Datenkarte 41 (siehe Fig. 9) automatisch die richtige Testsoftware auswählt.

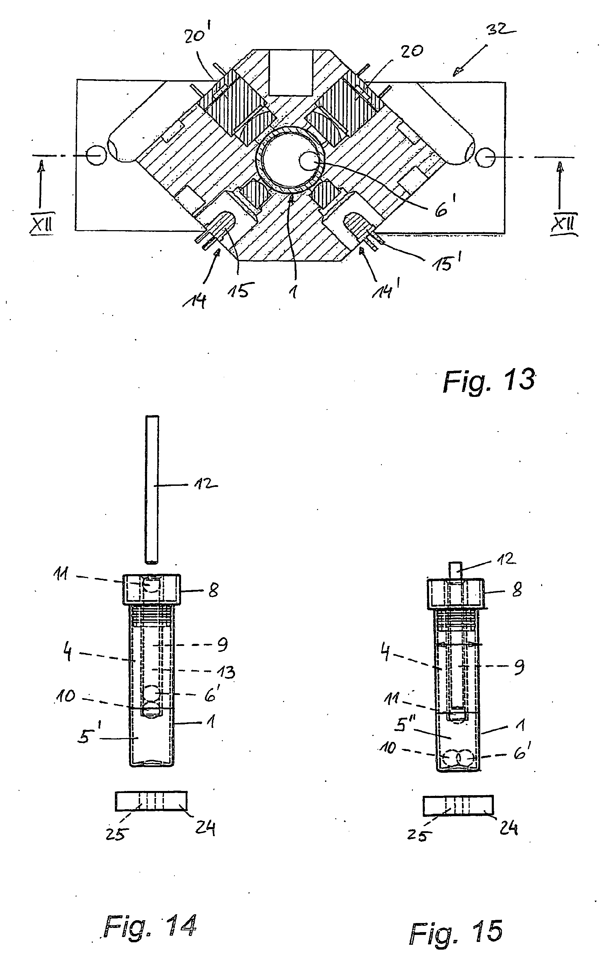

Bei der in den Fig. 14 und Fig. 15 dargestellten Ausführungsvariante des Testsets bestehend aus Mischbehälters samt Dosierelement ist in Fig. 14 die Probe bereits hinzugefügt und das Dosierelement 8 auf den Mischbehälter 1 aufgesetzt.

Erfindungsgemäß sind hier der Verschlusskolben 11 und der Stopfen 10 des Dosierelementes 8 jeweils als Kunststoffkugel ausgebildet, welche die zweite Flüssigkeit 13 sowie eine Stahlkugel 6' einschließen. Die Kunststoffkugeln bestehen beispielsweise aus Polyoxymethylen (POM bzw. Polyacetal), welche den Hohlraum 9 beidseitig verschließen. Die Kugel 11 wird nun vom Stempel 12 des Analysators hineingedrückt, wodurch die den Stopfen 10 bildende Kugel sowie die Stahlkugel 6' in den Mischbehälter 1 austreten und die zweite Flüssigkeit freigeben. Zum Vermischen der Flüssigkeiten wird die Stahlkugel 6' von der Magnetrührscheibe 24 mit den Permanentmagneten 25 in Bewegung versetzt. Es ist auch möglich, die Stahlkugel 6' als Stopfen 10 zu verwenden, wodurch die Kunststoffkugel an der Austrittsöffnung des Dosierelementes 8 entfallen kann.

### Erstes Beispiel CRP Messung

Als erstes Beispiel wird ein Messablauf einer CRP Messung (C- Reaktives Protein, dient hauptsächlich zur Unterscheidung viraler oder bakterieller Entzündung) dargestellt:
- Mischbehälter 1 ist mit Verschlusselement 2 verschlossen und mit Lysereagenz (1000 µl) und mit Rührteil (Magnetstab oder Kugel 6') bereits gefüllt;
- Verschlusselement 2 wird entfernt und Probenflüssigkeit (5 µl Vollblut) wird hinzugefügt (manuell, mit Pipette);
- Mischbehälter 1 wird mit Dosierelement 8 verschlossen (enthält Latexreagenz) und in photometrische Messeinrichtung 30 eingesetzt;
- Testidentifikation durch die Messeinrichtung (durch RFID-Chip in der Verpackung oder auf dem Mischbehälter);
- Lysereagenz und Probenflüssigkeit werden mit Hilfe der Mischeinheit 35 vermischt;
- Kalibrierwert wird gemessen (optional)
- Latexreagenz (250 µl) wir mit Hilfe des Stempels 12 der photometrischen Messeinrichtung 30 zudosiert;
- Lysereagenz, Probenflüssigkeit (Vollblut) und Latexreagenz werden mit Hilfe der Mischeinheit 35 vermischt;
- Chemische Reaktion wird mit Hilfe des Photometers gemessen;
- Konzentration wird bestimmt.

Der Messbereich der photometrischen Messeinrichtung liegt beispielsweise bei 0,2 bis 6 mg/dl.

### Zweites Beispiel: HbA1c-Test

Der Hba1c-Wert, landläufig auch als "Blutzuckergedächtnis" bezeichnet, gibt Rückschlüsse auf den Blutzuckerspiegel. Bei dieser Methode wird das Zuckerhämoglobin HbA1c in einer Blutprobe (lysiertes Vollblut) gemessen. Es wird untersucht, wie viel Blutfarbstoff (Hämoglobin) mit Zucker verbunden (glykosiert) ist.

Der ermittelte HbA1c-Wert zeigt die Höhe der durchschnittlichen Blutzuckerwerte während der letzten sechs bis zwölf Wochen an. Der Normalwert ist laborabhängig und liegt bei vier bis sechs Prozent. (Norm 4-6%) Der Prozentwert steht für den Anteil des verzuckerten Hämoglobins im Vergleich zum Gesamthämoglobin.

Im Mischbehälter befindet sich die erste HbA1c-Reagenz, im Dosierelement die zweite HbA1c-Reagenz. Der Testablauf erfolgt wie im Beispiel 1.

Ziel einer Diabetestherapie ist die Senkung des HbA1c unter 6,5 Prozent.

### Drittes Beispiel: HCY-Test

Chemisch gesehen gehört Homocystein (HCY) zu der Gruppe der sog. Aminosäuren. Im Körper wird Homocystein aus Methionin, einer anderen Aminosäure gebildet, die mit der Nahrung zugeführt wird. Homocystein wird normalerweise schnell wieder abgebaut, wobei Vitamin B6 (Pyridoxin), Vitamin B12 (Cobalamin) und Folsäure benötigt werden.

Homocystein konnte als eigenständiger Risikofaktor für atherosklerotische oder thromboembolische Ereignisse (periphere arterielle Verschlusskrankheit, Schlaganfall, koronare Herzkrankheit (Herzenge, Herzinfarkt), verengende Veränderung der Halsschlagader) identifiziert werden. Bei einer Reihe von weiteren Erkrankungen wie Altersdemenz, Entwicklung von Neuralrohrdefekten (Spina bifida) des Kindes Mutterleib und Blutarmut (Anämie) wurde ein Zusammenhang mit erhöhten Homocysteinspiegeln festgestellt.

Im Mischbehälter befindet sich die erste HCY-Reagenz, im Dosierelement die zweite HCY-Reagenz. Der Testablauf erfolgt wie im Beispiel 1.

Zielbereich für Homocystein ist unter 10 µmol/l im Serum.

## Patentansprüche

1. Testset für eine photometrische Messeinrichtung,
mit einem Mischbehälter (1), der ein von seiner Füllöffnungen (3) abnehmbares Verschlusselement (2) und eine in seinem Inneren (4) vorliegende, erste Flüssigkeit (5) aufweist, sowie
mit einem Dosierelement (8), welches in einem beidseitig verschlossenen Hohlraum (9) eine zweite Flüssigkeit (13) enthält, wobei das Dosierelement (8) nach der Abnahme des Verschlusselementes (2) vom Mischbehälter (1) und der Zugabe einer Probenflüssigkeit in die erste Flüssigkeit (5) in die Füllöffnung (3) des Mischbehälters (1) einsetzbar ist,
**dadurch gekennzeichnet, dass**
das Dosierelement (8) einen zur Gänze im Hohlraum (9) angeordneten, in den Hohlraum (9) axial verschiebbaren Verschlusskolben (11) aufweist und an der gegenüberliegenden Seite durch einen beweglichen Stopfen (10) verschlossen ist, welcher durch eine vom Verschlusskolben (11) ausgelöste Druckbeaufschlagung auf die zweite Flüssigkeit (13) mit dieser in das Innere des Mischbehälters (1) austritt.

2. Testset nach Anspruch 1, **dadurch gekennzeichnet, dass** der Flüssigkeitsspiegel (7) im Mischbehälter (1) derart bemessen ist, dass - zumindest nach der Vermischung mit der zweiten Flüssigkeit (13) - das Dosierelement (8) mit dessen Austrittsöffnung in die erste Flüssigkeit (5) im Mischbehälter (1) eintaucht.

3. Testset nach Anspruch 1 oder 2, **dadurch gekennzeichnet, dass** im Inneren (4) des Mischbehälters (1) oder des Dosierelementes (8) ein Magnetrührstab (6) oder ein ferromagnetisches Element, beispielsweise eine Stahlkugel (6'), vorliegt.

4. Testset nach einem der Ansprüche 1 bis 3, **dadurch gekennzeichnet, dass** der Verschlusskolben (11) und der Stopfen (10) des Dosierelementes (8) jeweils als Kunststoffkugel ausgebildet sind, welche die zweite Flüssigkeit (13) sowie eine Stahlkugel (6') einschließen.

5. Testset nach einem der Ansprüche 1 bis 4, **dadurch gekennzeichnet, dass** am Mischbehälter (1) ein berührungslos auslesbarer Informationsträger (23) beispielsweise ein RFID-Chip oder ein Barcode, angeordnet ist.

6. Testset nach einem der Ansprüche 1 bis 4, **dadurch gekennzeichnet, dass** in oder auf einer Verpackung des Mischbehälters (1) ein berührungslos auslesbarer Informationsträger beispielsweise ein RFID-Chip oder ein Barcode, beigelegt oder angeordnet ist.

7. Testset nach einem der Ansprüche 1 bis 6, **dadurch gekennzeichnet, dass** der Stopfens (10) aus einem Material besteht, welches in der ersten Flüssigkeit (5) im Mischbehälter (1) aufschwimmt.

8. Photometrisches Messverfahren für eine Probenflüssigkeit, welche mit einer ersten (5) und einer zweiten Flüssigkeit (13) vermischt wird, wobei die erste Flüssigkeit (5) in einem verschlossenen Mischbehälter (1) und die zweite Flüssigkeit (13) in einem Dosierelement (8) vorliegt, **gekennzeichnet durch** folgende Schritte:
- Öffnen des Mischbehälters (1);
- Hinzufügen der Probenflüssigkeit;
- Verschließen des Mischbehälters (1) mit einem Dosierelement (8), welches in einem mit einem beweglichen Stopfen (10) verschlossenen Hohlraum (9) die zweite Flüssigkeit (13) enthält;
- Vermischen der ersten Flüssigkeit (5) mit der Probenflüssigkeit;
- Einbringen der zweiten Flüssigkeit (13) aus dem Dosierelement (8) in den Mischbehälter (1), wobei **durch** einen zur Gänze im Hohlraum (9) angeordneten, in den Hohlraum (9) axial verschiebbaren Verschlusskolben (11), der an der gegenüberliegenden Seite des beweglichen Stopfen (10) angeordnet ist, Druck auf die zweite Flüssigkeit (13) ausgeübt und diese mit dem beweglichen Stopfen (10) in die erste Flüssigkeit entlassen wird;
- Vermischen der ersten Flüssigkeit (5), der Probenflüssigkeit und der zweiten Flüssigkeit (13);
- Photometrische Messung der chemischen Reaktion in einem Analysator; und
- Berechnen der Konzentration zumindest eines Probeninhaltsstoffes.

9. Verfahren nach Anspruch 8, **dadurch gekennzeichnet, dass** nach dem Vermischen der ersten Flüssigkeit (5) mit der Probenflüssigkeit eine photometrische Kalibriermessung durchgeführt wird.

10. Verfahren nach Anspruch 8 oder 9, **dadurch gekennzeichnet, dass** die Probenflüssigkeit mit der ersten (5) und der zweiten Flüssigkeit (13) mit Hilfe eines im Mischbehälter vorliegenden Magnetrührstabes (6) oder ferromagnetischen Elementes vermischt wird.

11. Verfahren nach einem der Ansprüche 8 bis 10, **dadurch gekennzeichnet, dass** die zweite Flüssigkeit (13) mit Hilfe eines Kolbens (11) aus dem Dosierelement (8) in das Innere des Mischbehälters (1) transferiert wird.

## Claims

1. A test set for a photometric measuring device,
comprising a mixing container (1) having a closing element (2) that can be removed from its filling hole (3) and a first liquid (5) which is located in the interior (4) of said mixing container (1),
and a dosing element (8) which contains a second fluid (13) in a hollow space (9) sealed on both sides, with the dosing element (8) being insertable into the filling hole (3) of the mixing container (1) after the removal of the closing element (2) from the mixing container (1) and the addition of a sample liquid to the first liquid (5),
**characterised in that**
the dosing element (8) comprises a closing plunger (11) which is entirely arranged in the hollow space (9) and which is axially displaceable in the hollow space (9), and is sealed on the opposite side by a movable plug (10), which as a result of a pressurization on the second liquid (13) triggered by the closing plunger (11) discharges with said liquid into the interior of the mixing container (1).

2. A test set according to claim 1, **characterised in that** the liquid level (7) in the mixing container (1) is dimensioned in such a way that, at least after mixing with the second liquid (13), the dosing element (8) will immerse with its discharge opening into the first liquid (5) in the mixing container (1).

3. A test set according to claim 1 or 2, **characterised in that** a magnetic stirring rod (6) or a ferromagnetic element such as a steel ball (6') is present in the interior (4) of the mixing container (1) or the dosing element (8).

4. A test set according to one of the claims 1 to 3, **characterised in that** the closing plunger (11) and the plug (10) of the dosing element (8) are respectively arranged as plastic balls which enclose the second liquid (13) and a steel ball (6').

5. A test set according to one of the claims 1 to 4, **characterised in that** an information carrier (23) such as an RFID chip or a barcode which is readable in a contactless way is arranged on the mixing container (1).

6. A test set according to one of the claims 1 to 4, **characterised in that** a contactless readable information carrier such as an RFID chip or a barcode is enclosed with or arranged on a packaging of the mixing container (1).

7. A test set according to one of the claims 1 to 6, **characterised in that** the plug (10) consists of a material which floats on the first liquid (5) in the mixing container (1).

8. A photometric measuring method for a sample liquid which is mixed with a first (5) and a second liquid (13), with the first liquid (5) being present in a sealed mixing container (1) and the second liquid (13) in a dosing element (8), **characterised by** the following steps:
- opening the mixing container (1);
- adding the sample liquid;
- sealing the mixing container (1) with a dosing element (8) which contains the second liquid (13) in a hollow space (9) sealed with a movable plug (10);
- mixing of the first liquid (5) with the sample liquid;
- introduction of the second liquid (13) from the dosing element (8) into the mixing container (1), with pressure being exerted on the second liquid (13) by a closing plunger (11) which is arranged entirely in the hollow space (9), is axially displaceable in the hollow space (9) and is arranged on the opposite side of the movable plug (10), and with the said second liquid being discharged with the plug (10) to the first liquid;
- mixing of the first liquid (5), the sample liquid and the second liquid (13);
- photometric measurement of the chemical reaction in an analyzer, and
- calculating the concentration of at least one sample ingredient.

9. A method according to claim 8, **characterised in that** a photometric calibrating measurement is performed after the mixing of the first liquid (5) with the sample liquid.

10. A method according to claim 8 or 9, **characterised in that** the sample liquid with the first liquid (5) and the second liquid (13) is mixed with the help of a magnetic stirring rod (6) or ferromagnetic element present in the mixing container.

11. A method according to one of the claims 8 to 10, **characterised in that** the second liquid (13) is transferred with the help of a plunger (11) from the dosing element (8) to the interior of the mixing container (1).

## Revendications

1. Equipement d'essai pour une installation de mesure photométrique comprenant :
* un récipient de mélange (1) muni d'un élément d'obturation (2) amovible de son orifice de remplissage (3) et un premier liquide (5) à l'intérieur (4) du récipient, et
* un élément de dosage (8) contenant un second liquide (13) dans une cavité (9) fermée des deux côtés,
* l'élément de dosage (8) se plaçant dans l'orifice de remplissage (3) du récipient de mélange (1) après enlèvement de l'élément d'obturation (2) du récipient de mélange (1) et adjonction d'un liquide échantillon dans le premier liquide (5),
équipement **caractérisé en ce que**
l'élément de dosage (8) comporte un piston d'obturation (11) venant dans la cavité (9) et coulissant axialement dans la cavité (9) et cette cavité (9) est fermée sur le côté opposé par un bouchon mobile (10) qui, par l'application d'une pression exercée par le piston d'obturation (11) sur le second liquide (13), s'échappe avec ce liquide à l'intérieur du récipient de mélange (1).

2. Equipement d'essai selon la revendication 1,
**caractérisé en ce que**
le niveau du liquide (7) dans le récipient de mélange (1) est dimensionné pour qu'au moins après le mélange avec le second liquide (13), l'élément de dosage (8) est immergé par son orifice de sortie dans le premier liquide (5) du récipient de mélange (1).

3. Equipement d'essai selon la revendication 1 ou 2,
**caractérisé par**
un agitateur magnétique (6) ou un élément ferromagnétique tel qu'une bille d'acier (6') à l'intérieur (4) du récipient de mélange (1) ou de l'élément de dosage (8).

4. Equipement d'essai selon l'une des revendications 1 à 3,
**caractérisé en ce que**
le bouchon d'obturation (11) et le bouchon (10) de l'élément de dosage (8) sont réalisés chacun sous la forme d'une bille en matière plastique emprisonnant le second liquide (13) et une bille en acier (6').

5. Equipement d'essai selon l'une des revendications 1 à 4,
**caractérisé en ce que**
le récipient de mélange (1) porte un support d'information (23) lisible sans contact, par exemple une puce RFID ou un code barre.

6. Equipement d'essai selon l'une des revendications 1 à 4,
**caractérisé en ce qu'**
un support d'information lisible sans contact, par exemple une puce RFID ou un code barre sont placés ou installés dans ou sur l'emballage du récipient de mélange (1).

7. Equipement d'essai selon l'une des revendications 1 à 6,
**caractérisé en ce que**
le bouchon (10) est en un matériau qui flotte dans le premier liquide (5) du récipient de mélange (1).

8. Procédé de mesure photométrique d'un liquide échantillon qui se mélange à un premier liquide (5) et un second liquide (13),
* le premier liquide (5) étant dans un récipient de mélange (1), fermé et le second liquide (13) se trouvant dans un élément de dosage (8), procédé **caractérisé par** les étapes suivantes :
- ouvrir le récipient de mélange (1),
- ajouter le liquide échantillon,
- fermer le récipient mélangeur (1) avec un élément de dosage (8) contenant le second liquide (13) dans une cavité (9) fermée par un bouchon mobile (10),
- mélanger le premier liquide (5) au liquide échantillon,
- introduire le second liquide (13) à partir de l'élément de dosage (8) dans le récipient mélangeur (1),
* un piston d'obturation (11), installé en totalité dans la cavité (9) et coulissant axialement dans la cavité (9), étant prévu sur le côté opposé du bouchon mobile (10), pour exercer une pression sur le second liquide (13) et laisser celui-ci s'échapper avec le bouchon mobile (10) dans le premier liquide,
- mélanger le premier liquide (5), le liquide échantillon et le second liquide (13),
- effectuer une mesure photométrique de la réaction chimique dans un analyseur, et
- calculer la concentration d'au moins une des matières contenues dans l'échantillon.

9. Procédé selon la revendication 8,
**caractérisé en ce qu'**
après avoir mélangé le premier liquide (5) au liquide échantillon, on effectue une mesure de calibrage photométrique.

10. Procédé selon la revendication 8 ou 9,
**caractérisé en ce qu'**
on mélange le liquide échantillon avec le premier liquide (5) et le second liquide (13) à l'aide d'un agitateur magnétique (6) présent dans le récipient de mélange ou d'un élément ferromagnétique.

11. Procédé selon l'une des revendications 8 à 10,
**caractérisé en ce qu'**
on transfère le second liquide (13) à l'aide d'un piston (11) de l'élément de dosage (8) jusque dans le récipient de mélange (1).
